# EUROPÄISCHE PATENTSCHRIFT

(11) **EP 3 459 154 B1**
(45) Veröffentlichungstag und Bekanntmachung des Hinweises auf die Patenterteilung: **01.12.2021**
(21) Anmeldenummer: 17730755.0
(22) Anmeldetag: 12.06.2017
(51) Int. Cl.: H02J 3/46, H02J 3/38

(54) **ENERGIEVERSORGUNGSSYSTEM FÜR EIN INSELNETZ**
POWER SUPPLY FOR AN ISOLATED NETWORK
ALIMENTATION ÉLECTRIQUE POUR UN RESEAU ISOLÉ

(30) Priorität: 13.07.2016 DE 102016212789
(43) Veröffentlichungstag der Anmeldung: 27.03.2019
(73) Patentinhaber: Siemens Energy Global GmbH & Co. KG, 81739 München (DE)
(72) Erfinder: HACKBARTH, Martin, 90411 Nürnberg (DE); MÖSE-SINGER, Christian, 91052 Erlangen (DE)
(86) Internationale Anmeldenummer: PCT/EP2017/064243
(87) Internationale Veröffentlichungsnummer: WO 2018/010903

(56) Entgegenhaltungen:
- WO-A1-2016/042199
- CN-B- 103 178 551
- DE-A1-102005 062 583

## Beschreibung

Die Erfindung betrifft ein Energieversorgungssystem für ein Inselnetz. Das Energieversorgungssystem weist zumindest zwei Generatoren zur Erzeugung elektrischer Energie auf.

Inselnetze sind beispielsweise von Schiffen bekannt, aber auch von Pipelineverdichterstationen. Das Inselnetz kann ein DC-Netz, ein AC-Netz oder ein gemischtes Netz sein.

Aus der DE 10 2010 040 613 A1 ist beispielsweise ein Inselnetz mit einer Frequenz von größer 60Hz bekannt, welches insbesondere für Pipelineverdichterstation eingesetzt wird. Dieses Inselnetz weist zumindest eine Gasturbine auf, die mit einer dynamoelektrischen Maschine direkt gekuppelt ist. Die dynamoelektrische Maschine ist über eine Sammelschiene mit einer Entkopplungsvorrichtung mit einem öffentlichen Netz bzw. Verbundnetz verbunden. An die Sammelschiene sind außerdem weitere elektrische Betriebsmittel, wie Kompressoren, elektrisch angeschlossen.

Aus der DE 10 2009 017 023 A1 ist beispielsweise ein Inselnetz eines Schiffes bekannt. Bei Schiffsantrieben mit einem Umrichter mit einem Gleichstromzwischenkreis kann die beim generatorischen Bremsbetrieb frei werdende Energie über einen Umrichter ins Netz zurückgespeist werden.

Aus der DE 102 20 738 A1 ist ein Energieversorgungssystem für Inselnetze bekannt. Unter diesem Energieversorgungssystem für Inselnetze wird ein ganzheitliches Energiesystem verstanden, also ein Energiesystem, in dem elektrische Energie erzeugt, übertragen und schließlich wieder in andere Energieformen umgewandelt wird, wobei das System von seinem Ausmaß räumlich begrenzt und -nicht mit einer landesweiten Energieversorgung vergleichbar ist. Derartige Systeme sind insbesondere auf See gebundenen und/oder beweglichen Einrichtungen vorzufinden. So z.B. auf Schiffen und sonstigen Seefahrzeugen, Bohrplattformen oder anderen isolierten, vorzugsweise seegebundenen technischen Einrichtungen mit Energiebedarf.

Aus der CN 103 178 551 B ist ein Leistungsoptimierungssteuerverfahren für ein Offshore Energienetzwerk bekannt. Es wird ein mathematisches Modell mit nichtlinearer Leistungsoptimierung erstellt. Dabei werden z.B. Energiekosten für die Energieerzeugung, Verluste bei der aktiven Leistungsübertragung, eine Blindleistungsbilanz, berücksichtigt.

Aus der WO 2016/042199 A1 ist ein Verfahren und ein System zum Antreiben einer Kraftmaschineneinheit entweder in einem Drehzahlsteuermodus oder in einem Laststeuermodus bekannt. Zum Ändern des Steuermodus werden Steuermodusdaten der Kraftmaschineneinheiten gesendet und Steuermodusdaten anderer Kraftmaschineneinheiten unter den Einheiten empfangen, die elektrisch miteinander verbunden sind.

Aus der DE 10 2005 062 583 A1 ist ein Verfahren zum Betrieb eines Energiesystems eines Schiffes sowie ein dafür geeignetes Energiesystem bekannt. Ein Energiesystem weist mindestens eine Hauptmaschine zur Erzeugung von mechanischer Energie zum Antrieb einer Wellenanlage, die mit einem Schiffspropeller gekuppelt ist, eine Stromgeneratoranlage zur Erzeugung elektrischer Energie für ein elektrisches Netz des Schiffes und mindestens eine schneller als die Hauptmaschine laufende Hilfsmaschine zur Erzeugung mechanischer Energie zum Antrieb der Stromgeneratoranlage auf. Es wird vorgeschlagen, dass durch Steuerung der Richtung und Größe eines Energieflusses die für den Antrieb des Schiffspropellers und für das elektrische Netz benötigte Energie bereitgestellt und dabei das Gesamtsystem, bestehend aus der Hauptmaschine und der mindestens einen Hilfsmaschine, in einem vorgebbaren Betriebspunkt betrieben wird.

Eine Aufgabe der Erfindung ist es ein effizientes Energieversorgungssystem insbesondere in einem Inselnetz bereitzustellen.

Eine Lösung der Aufgabe ergibt sich bei einem Energieversorgungssystem nach Anspruch 1, bzw. bei einem Verfahren zum Betrieb eines Inselnetzes nach Anspruch 6. Ausgestaltungen ergeben sich gemäß der abhängigen Ansprüche 2 bis 5 bzw. 7 bis 10.

Ein Energieversorgungssystem für ein Inselnetz, mit einem Energiemanagementsystem, weist eine erste Stromerzeugungseinrichtung, eine zweite Stromerzeugungseinrichtung, eine dritte Stromerzeugungseinrichtung und eine vierte Stromerzeugungseinrichtung auf. Stromversorgungseinrichtungen sind beispielsweise Sets aus einem Diesel und einem Generator, einer Gasturbine und einem Generator, eine wiederaufladbare Batterie, Supercaps, etc. Das Energiemanagementsystem ist beispielsweise eine zentrale oder verteilte Kontrolleinrichtung, welche Steuerungs- und oder Regelungsaufgaben erfüllt. Das Energieversorgungssystem befindet sich beispielsweise auf einem Schiff, einer Plattform, wie einer Ölplattform, einer Gasplattform, oder ist ein Inselnetz für eine Pumpstation einer Pipeline, eine mobile Fracingstation etc. Das Energieversorgungssystem weist einen ersten Betriebszustand und einen zweiten Betriebszustand auf, wobei der erste Betriebszustand vom zweiten Betriebszustand zeitlich unterschiedlich ist. Der erste Betriebszustand folgt als dem zweiten Betriebszustand unmittelbar oder mit Unterbrechung und umgekehrt. Im ersten Betriebszustand ist der ersten Stromerzeugungseinrichtung ein erster Betriebsmodus zugeordnet und der zweiten Stromerzeugungseinrichtung ist ein zweiter Betriebsmodus zugeordnet. Im zweiten Betriebszustand ist der zweiten Stromerzeugungseinrichtung der erste Betriebsmodus zugeordnet. Der Betriebsmodus ist eine Art wie die Stromerzeugungseinrichtung betrieben wird. Beispiele hierfür sind eine Spannungsregelung, eine Frequenzregelung, eine Leistungsoptimierung, eine Optimierung der Reaktionsgeschwindigkeit bei Lastschwankungen, etc. In einer Ausgestaltung betrifft zumindest ein Betriebsmodus einen ISO-Mode oder einen DROOP-Mode.

Das Energieversorgungssystem weist eine Last oder eine Vielzahl von Lasten auf. Abhängig von deren Leistungsbedarf, den Leistungsschwankungen, der benötigten Blindleistung und anderen Randbedingungen kann es notwendig sein bestimmten Stromerzeugungseinrichtungen bestimmte Betriebsmodi zuzuordnen, in denen diese dann betreibbar sind, bzw. betrieben werden, um die Effizienz des Systems zu verbessern. Energie effiziente Systeme und eine elektrisches inselnetzwerkstabilisierende Energie Management Regelung für Inselnetze mit eigener Energieerzeugung von Turbinen und Generatoren (Gas-und Dampfturbinen, Dieselmaschinen und den zugehörigen Generatoren) erlangen eine immer größere Bedeutung, da die Energiekosten steigen und die Umweltanforderungen wachsen.

Die Zuordnung eines Betriebsmodus hängt von einer Priorisierung der Stromerzeugungseinrichtungen ab. Weist das Energiemanagementsystem beispielsweise 10 verfügbare Stromerzeugungseinrichtungen gleicher oder unterschiedlicher Leistung auf, so kann abhängig von der benötigten Leistung, welche von den Leistungsanforderungen der Lasten abhängt, eine unterschiedliche Anzahl von Stromerzeugungseinrichtungen aktiviert sein bzw. werden. Sowohl Reihenfolge der Aktivierung wie auch die Reihenfolge der Zuordnung der unterschiedlichen Betriebsmodi kann priorisiert sein.

Das Energiemanagementsystem ist insbesondere übergeordnet und regelt im Energieversorgungssystem, insbesondere eines Inselnetzes, die Wirkleistungsverteilung und/oder die Blindleistungsverteilung zwischen den erzeugenden Stromerzeugungseinrichtungen, wie z.B. eines Sets aus einer Turbine und einem Generator. Ein Generator ist beispielsweise eine Synchronmaschine oder eine Asynchronmaschine. Das übergeordnete Energiemanagementsystem regelt also in einer Ausgestaltung nicht die Turbinen und Generatoren in deren optimalen Wirkungsgrad und optimiert lokal die Energieeffizienz, sondern verteilt die Last zwischen den Stromerzeugungseinrichtungen prozentual zu je gleichen Teilen oder zu unterschiedlichen Teilen.

Das Energieversorgungssystem ist derart ausgestaltbar, dass die erste Stromerzeugungseinrichtung mit einer Priorität 1 auf die Frequenz und die Spannung im Netz regelt. Dies kann den ersten Betriebsmdous darstellen. Eine zweite oder weitere Stromerzeugungseinrichtung wird in dem jeweiligen optimalen Betriebspunkt (z.B. abhängig von Drehzahl, Wirkleistung, Blindleistung, Dampfdruck, Abgastemperatur, etc.) betrieben. Dies kann den zweiten Betriebsmodus darstellen. Eine zusätzliche Stromerzeugungseinrichtung, zu der zweiten oder weiteren Stromerzeugungseinrichtung, kann dafür vorgesehen sein die im Netz benötigte Blindleistung bzw. die restliche Wirkleistung bereitzustellen. Dies kann einen dritten Betriebsmodus darstellen.

In einer Ausgestaltung des Energieversorgungssystems kann die erste Stromerzeugungseinrichtung mit der Priorität 1 auf eine geregelte Spannung für den Generator und auf eine geregelte Frequenz für eine Gasturbine oder einen Diesel gefahren werden. Dies ist ein Betriebsmodus für die erste Stromversorgungseinrichtung, welcher sich vom Betriebsmodus der zweiten Stromversorgungseinrichtung unterscheidet. Die zweite Stromversorgungseinrichtung hat die Priorität 2. Fällt nun beispielsweise wegen eines Defektes die erste Stromversorgungseinrichtung aus, so übernimmt die zweite Stromversorgungseinrichtung den Betriebsmodus der ersten Stromversorgungseinrichtung. Nach dem Ausfall der ersten Stromversorgungseinrichtung mit der Priorität 1 hat dann die zweite Stromversorgungseinrichtung mit der Priorität 2 den Betriebsmodus, bei welchem auf eine geregelte Spannung für den Generator und auf eine geregelte Frequenz für eine Gasturbine oder einen Diesel gefahren wird.

Der erste Betriebsmodus ein ISO-Mode. Im ISO-Mode erfolgt die Regelung einer Turbine nach der Frequenz. Es handelt sich um einen isochronen Betriebsmodus. So kann erreicht werden, dass durch die Regelung der ISO-Maschine, also der Stromerzeugungseinrichtung welche im ISO-Mode gefahren wird, auf z.B. 50% der maximal möglichen Wirkleistung und einen cos ϕ von z.B. 0,9 die Blindleistung dieser Maschine groß genug ist, dass bei Zu- oder Abschalten von Lasten oder bei unvorhergesehenen Ereignissen im elektrischen Netzwerk, die Stromerzeugungseinrichtung die Möglichkeit an Reserven hat um im erlaubten Bereich der Generator Stabilitätskurve zu bleiben und gemäß dieser zu reagieren ohne an die physikalischen Grenzen der Turbine und des Generators zu kommen.

Der zweite Betriebsmodus ist ein DROOP-Mode. Im DROOP-Mode erfolgt die Regelung einer Turbine der Stromversorgungseinrichtung nach einer Droopcharakteristik. Dabei sind Regelabweichungen in der Frequenz erlaubt. Der zweite Betriebsmodus ist also ein DROOP-Mode.

Der effizienteste Arbeitspunkt wird für ein oder jedes Turbinen Generator Set individuell dynamisch berechnet. Der optimale Arbeitspunkt wird vom Turbinen und Generatorhersteller definiert und durch bestimmte Umgebungsparameter (z.B. Umgebungstemperatur, Dampftemperatur, Dampfdruck, Kühlwassertemperatur,...) bestimmt. Um gleichzeitig eine möglichst hohe elektrische Netzstabilität in Bezug auf Inselnetzfrequenz und Inselnetzspannung zu erreichen wird die ISO-Maschine (Turbine), also die Stromerzeugungseinrichtung mit Turbine welche im ISO-Mode betrieben wird, auf z.B. 50% ihrer Kapazität geregelt (durch Wirkleistungsverteilung der anderen im Inselnetz befindlichen Turbinen), befindet sich aber im Frequenzreglermodus. Dieser stabilisiert die Inselnetzfrequenz auf die Nennfrequenz des Netzes. Der zugehörige Generator der ISO Turbine befindet sich im Spannungsregler Modus und wird vom Power Management System auf z.B. cosϕ=0,9 geregelt (durch Blindleistungsverteilung der anderen im Inselnetz befindlichen Turbinen). Dieser stabilisiert die Inselnetzspannung auf die Nennspannung des Netzes.

Die Stromerzeugungseinrichtung, welche im ersten Betriebsmodus ist, hat eine Nennleistung von mindestens 200% der Nennleistung der größten Last. So ergibt sich eine ausreichende Leistungsreserve.

Der zweite Betriebsmodus hat eine Leistungsoptimierungsfunktion. So kann eine Stromversorgungseinrichtung besonders Energieeffizient betrieben werden.

Das Energieversorgungssystems weist zudem eine dritte Stromerzeugungseinrichtung auf, wobei im ersten Betriebszustand der dritten Stromerzeugungseinrichtung ein dritter Betriebsmodus zugeordnet ist. Der dritte Betriebsmodus dient beispielsweise der Blindleistungskompensation im Netz und nicht in erster Linie einem effizienten Betrieb der Stromerzeugungseinrichtung.

Im zweiten Betriebszustand ist einer dritten Stromerzeugungseinrichtung der zweite Betriebsmodus oder ein weiterer Betriebsmodus zugeordnet. Dies kann beispielsweise dann der Fall sein, wenn die erste Stromerzeugungseinrichtung ausgefallen ist, die zweite Stromerzeugungseinrichtung in den ersten Betriebsmodus wechselt und die dritte Stromerzeugungseinrichtung in den zweiten Betriebsmodus wechselt. Es können auch Modi kombiniert werden. So kann der erste Betriebsmodus auch die Funktion der Blindleistungskompensation aufweisen, wenn keine dritte Stromerzeugungseinrichtung aktiv ist, welche im dritten Betriebsmodus gefahren wird.

Das Energieversorgungssystems weist zudem eine vierte Stromerzeugungseinrichtung auf, wobei im ersten Betriebszustand der vierten Stromerzeugungseinrichtung der zweite Betriebsmodus zugeordnet ist, wobei im zweiten Betriebszustand der vierten Stromerzeugungseinrichtung auch der zweite Betriebsmodus zugeordnet ist.

Im ersten Betriebszustand der dritten Stromerzeugungseinrichtung ist der zweite Betriebsmodus zugeordnet, wobei im zweiten Betriebszustand der dritten Stromerzeugungseinrichtung auch der zweite Betriebsmodus zugeordnet ist, wobei der zweite Betriebsmodus ein DROOP-Mode ist und eine Leistungsergänzungsfunktion aufweist, wobei im ersten Betriebszustand der vierten Stromerzeugungseinrichtung ein dritter Betriebsmodus zugeordnet ist, wobei im zweiten Betriebszustand der vierten Stromerzeugungseinrichtung auch der dritte Betriebsmodus zugeordnet ist. Durch die unterschiedliche Zuordnung der Modi bei bekannten Optimierungen der vorhandenen aktiven und inaktiven Stromerzeugungseinrichtungen kann das Gesamtsystem, also das Energieversorgungssystem, optimiert werden. Abhängig von der Leistungsgröße und den optimalen Betriebspunkten kann für ein damit individuelles Energieversorgungssystem insbesondere im Inselnetzbetrieb eine optimale Priorisierung der zugeordneten Modi erfolgen.

In einer Ausgestaltung des Energieversorgungssystems weist der erste Betriebsmodus eine Leistungsfunktion auf. Durch die Berechnung wie viel Wirk- und Blindleistung in einem elektrischen Inselnetzwerk benötigt wird und durch die Berechnung wie viel Leistung der vorhandenen sich in Betrieb befindlichen Stromerzeugungseinrichtungen, also z.B. Sets von Turbinen und Generatoren, wird die Last auf die Turbinen so verteilt, dass möglichst viele Turbinen Generator Sets im optimalen (energieeffizientesten) Arbeitspunkt betrieben werden. In einer Ausgestaltung des Energieversorgungssystems weist der erste Betriebsmodus eine cosϕ-Funktion auf. So kann der Versatz zwischen Spannung und Strom ausgeregelt werden.

In einer Ausgestaltung des Energieversorgungssystems weist zumindest eine der Stromerzeugungseinrichtungen eine Verbrennungskraftmaschine und einen elektrischen Generator auf. Der Generator ist beispielsweise ein fremderregter Synchrongenerator. Bei diesem kann die Regelung der Blindleistung über die Erregerspannung erfolgen. Auch eigenerregte Synchronmaschinen können als Generator verwendet werden. In einer Ausgestaltung des Energieversorgungssystems ist nur der geregelte Blindleistungsgenerator fremderregt.

In einer Ausgestaltung des Energieversorgungssystems sind die Stromerzeugungseinrichtungen Versorger eines Inselnetzes, wobei die Stromerzeugungseinrichtungen im Inselnetz je eine Leistung kleiner 100 MW aufweisen. So kann eine hohe Redundanz und Effizienz beispielsweise bei großen Schiffen wie Kreuzfahrtschiffen, Containerschiffen, etc. erreicht werden.

In einem Verfahren zum Betrieb eines Inselnetzes, welches insbesondere ein Energieversorgungssystem in einem Schiff oder einer Öl- oder Gas-Plattform ist, wird die im Inselnetz benötigte Wirkleistung und Blindleistung berechnet und die Last auf eine Vielzahl von Stromerzeugungseinrichtungen derart verteilt, dass der Betrieb der Stromerzeugungseinrichtungen optimiert wird. Stromerzeugungseinrichtungen sind beispielsweise Sets von einem Diesel und einem Generator oder von einer Gasturbinde und einem Generator.

So viele Sets wie möglich sollen im optimalen Betriebspunkt geregelt werden. Durch die Berechnung wie viel Wirk- und Blindleistung in einem elektrischen Inselnetzwerk benötigt wird und durch die Berechnung wie viel Leistung durch die vorhandenen sich in Betrieb befindlichen Turbinen und Generatoren bereitgestellt werden kann, soll die Last auf die Turbinen so verteilt werden, dass möglichst viele Turbinen Generator Sets im optimalen und energieeffizientesten Arbeitspunkt betrieben werden. Jedes Set kann ihren eigenen optimalen Arbeitspunkt haben.

In einer Ausgestaltung des Verfahrens wird zur Optimierung des Betriebes der Stromerzeugungseinrichtungen also die Mehrzahl der Stromerzeugungseinrichtungen in einem optimalen Betriebspunkt betrieben werden. Zumindest eines der Sets wird in einem optimierten und/oder optimalen Reaktionspunkt und/oder Bereich gefahren, um schneller auf Laständerungen reagieren zu können als in einem Betrieb im energieeffizientesten Betriebspunkt. So kann also ein Set in einem verbesserten Reaktionspunkt betrieben werden und eine maximal weitere Anzahl von weiteren Sets in einem optimalen Betriebspunkt bezüglich der Energieeffizienz. Der effizienteste Arbeitspunkt, was die Energieeffizienz betrifft, wird für jedes Turbinen Generator Set individuell und insbesondere dynamisch berechnet. Der optimale Arbeitspunkt wird beispielsweise vom Turbinen und/oder Generatorhersteller definiert und durch bestimmte Umgebungsparameter wie z.B. Umgebungstemperatur, Dampftemperatur, Dampfdruck, Kühlwassertemperatur bestimmt oder beeinflusst.

Um gleichzeitig eine möglichst hohe elektrische Netzstabilität in Bezug auf Inselnetzfrequenz und Inselnetzspannung zu erreichen wird in einer Ausführungsform die ISO-Mode betriebene Maschine (Turbine) auf z.B. ungefähr 50% ihrer Kapazität geregelt, was durch eine Wirkleistungsverteilung der anderen im Inselnetz befindlichen Turbinen geschieht, befindet sich aber im Frequenzregelmodus. Dieser stabilisiert die Inselnetzfrequenz auf die Nennfrequenz des Netzes. Der zugehörige Generator der ISO-Turbine befindet sich im Spannungsregler Modus und wird vom Energiemanagementsystem (Power Management System) auf z.B. einem cos ϕ von ca. 0,9 geregelt. Dies ist möglich durch eine aktive Blindleistungsverteilung der anderen im Inselnetz befindlichen Turbinen durch das Energiemanagementsystem. Dies stabilisiert die Inselnetzspannung auf die Nennspannung des Netzes.

In einer Ausgestaltung des Verfahrens wird zur Optimierung des Betriebes des Inselnetzes der Wert der erzeugten Leistung, welcher mit Stromerzeugungseinrichtungen im optimalen Betriebspunkt erzeugt wird, maximiert. In diesem Fall wird also nicht die Anzahl der aktiven Sets optimiert, welche im energieeffizientesten Betriebspunkt betrieben werden, sondern es wird die Gesamtleistung optimiert, welche durch aktive Sets betrieben im energieeffizientesten Betriebspunkt erzeugt wird.

Durch das Betreiben der Stromerzeugungseinrichtungen, welche beispielsweise nicht für eine Blindleistungskompensation oder für eine schnelle Lastreserve benötigt werden, also für die restlichen im elektrischen Netzwerk befindlichen Turbinen-Generatorsets im energieeffizientesten Betriebspunkt wird sichergestellt, dass für die Strom/Spannungserzeugung bei Turbinen und Generatoren, egal ob Dampf, Gas oder Öl, ein möglichst hoher Gesamtwirkungsgrad erzielt wird. Dies trägt zur Reduktion des Gesamtenergiebedarfs bei.

In einer Ausgestaltung des Verfahrens wird ein Energieversorgungssystem der beschriebenen Art verwendet, welche insbesondere zum Einsatz auf See geeignet ist.

Die Erfindung wird nachfolgend an Hand von Ausführungsbeispielen erläutert. Dabei zeigt:
- FIG 1: ein Energieversorgungssystem in einem ersten Betriebszustand;
- FIG 2: das Energieversorgungssystem in einem zweiten Betriebszustand, und
- FIG 3: eine Energieerzeugungseinrichtung.

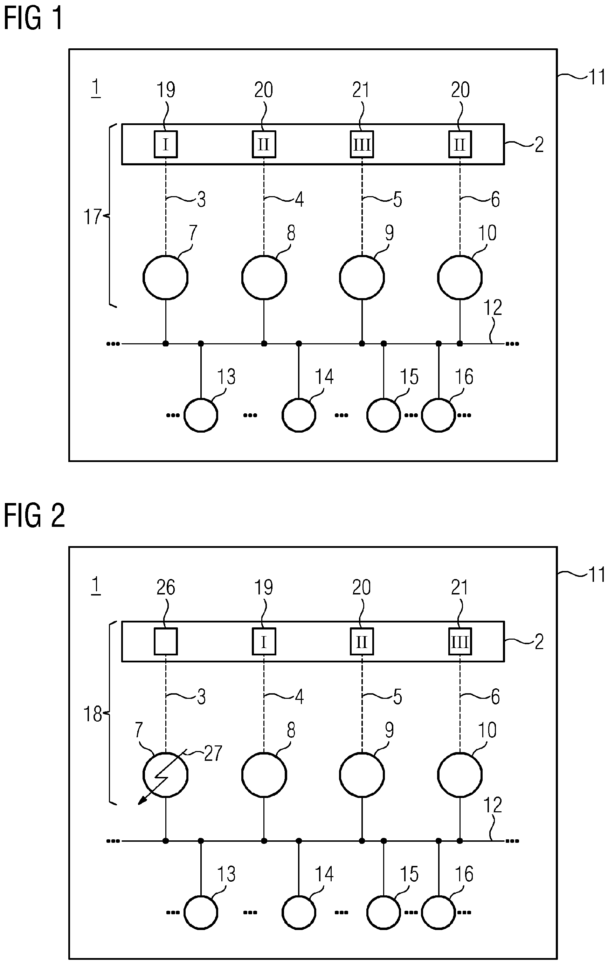

Die Darstellung nach FIG 1 zeigt ein Energieversorgungssystem 1, mit einem Energiemanagementsystem 2, einer ersten Stromerzeugungseinrichtung 7, einer zweiten Stromerzeugungseinrichtung 8, einer dritten Stromerzeugungseinrichtung 9 und einer vierten Stromerzeugungseinrichtung 10. Das Energiemanagementsystem 2 ist über eine Kommunikationsverbindung 3 mit der ersten Stromerzeugungseinrichtung 7 datentechnisch verbunden. Das Energiemanagementsystem 2 ist über eine Kommunikationsverbindung 4 mit der zweiten Stromerzeugungseinrichtung 8 datentechnisch verbunden. Das Energiemanagementsystem 2 ist über eine Kommunikationsverbindung 5 mit der dritten Stromerzeugungseinrichtung 9 datentechnisch verbunden. Das Energiemanagementsystem 2 ist über eine Kommunikationsverbindung 6 mit der vierten Stromerzeugungseinrichtung 10 datentechnisch verbunden. Durch das Energiemanagementsystem 2 können den Stromerzeugungseinrichtungen 7, 8, 9, 10 unterschiedliche Modi 19, 20, 21 zugewiesen werden. Ein erster Betriebsmodus I 19 ist der ersten Stromerzeugungseinrichtung 7 zugeordnet. Die erste Stromerzeugungseinrichtung 7 wird also im Betriebsmodus I 19 betrieben. Ein zweiter Betriebsmodus II 20 ist der zweiten Stromerzeugungseinrichtung 8 zugeordnet. Die zweite Stromerzeugungseinrichtung 8 wird also im Betriebsmodus II 20 betrieben. Ein dritter Betriebsmodus III 21 ist der dritten Stromerzeugungseinrichtung 9 zugeordnet. Die dritte Stromerzeugungseinrichtung 9 wird also im Betriebsmodus II 21 betrieben. Der zweite Betriebsmodus I 20 ist der Stromerzeugungseinrichtung 10 zugeordnet. Die vierte Stromerzeugungseinrichtung 10 wird also im Betriebsmodus II 20 betrieben. Die den unterschiedlichen Stromerzeugungseinrichtungen 7, 8, 9, 10 zugeordneten Modi 19, 20, 21 bilden einen ersten Betriebszustand 17. Die den unterschiedlichen Stromerzeugungseinrichtungen 7, 8, 9, 10 speisen ein Verteilernetz 12, an welchem ein erste Last 13, eine zweite Last 14, eine dritte Last 15, eine vierte Last 16 und weitere Lasten angeschlossen sind. Alles zusammen bildet ein Inselnetz 11. Der erste Betriebszustand 17, unterscheidet sich von einem zweiten Betriebszustand 18, welcher beispielhaft in FIG 2 dargestellt ist. Dabei handelt es sich um das gleiche Inselnetz 11 aber um unterschiedliche Betriebszeitpunkte.

Die Darstellung nach FIG 2 zeigt das Energieversorgungssystem 1, mit dem Energiemanagementsystem 2 und den Stromerzeugungseinrichtung 7, 8, 9 und 10. Durch das Energiemanagementsystem 2 sind den Stromerzeugungseinrichtungen 7, 8, 9, 10 unterschiedliche Modi 19, 20, 21 zugewiesen.

Nach FIG 2 wird in der Stromerzeugungseinrichtung 7 ein Fehler 27 angenommen. Die Stromerzeugungseinrichtung 7 ist damit inaktiv und ohne Betriebsmodus. Der zweiten Stromerzeugungseinrichtung 8 ist nun der erste Betriebsmodus I 19 zugeordnet. Der dritten Stromerzeugungseinrichtung 9 ist der zweite Betriebsmodus II 20 zugeordnet. Die vierten Stromerzeugungseinrichtung 10 ist der dritte Betriebsmodus III 21 zugeordnet. Durch den Wechsel der Modi kann das Inselnetz weiter effizient betrieben werden, obwohl die erste Stromerzeugungseinrichtung 7 ausgefallen ist. Nach Figur zwei ist ein zweiter Betriebszustand 18 dargestellt der zum ersten Betriebszustand zeitlich versetzt auftritt und beispielsweise durch einen Fehlerfall, Wartungsarbeiten an Stromerzeugungseinrichtungen oder durch unterschiedliche Belastungen durch angeschlossene Lasten 13, 14, 15, 16 hervorgerufen werden kann. Die zweite Stromversorgungseinrichtung 8 hat eine höhere Priorisierung im Vergleich zu den weiteren, so dass dieser der erste Modus I 19 zugewiesen ist. Der erste Betriebsmodus 19 ist beispielsweise ein ISO-Mode mit Frequenzregelung und Spannungsregelung. Dabei kann beispielsweise eine durchschnittliche Leistungsauslastung von 50% vorgesehen sein, bei einem cos ϕ von 0,9. Der zweite Betriebsmodus II 20 ist beispielsweise ein DROOP-Mode mit einer Regelung auf optimaler Energieeffizienz für die Blindleistung und die Wirkleistung. Der dritte Betriebsmodus III 21 ist beispielsweise auch ein DROOP-Mode, wobei die restlich benötigte Blindleistung und Wirkleistung erzeugt wird.

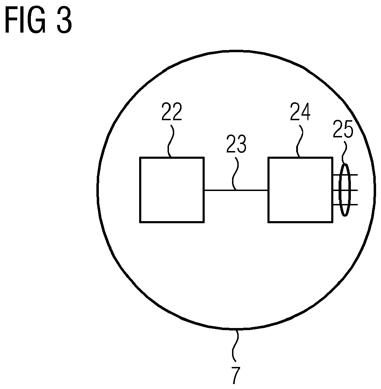

Die Darstellung nach FIG 3 zeigt die Stromerzeugungseinrichtung 7, bei welcher eine Verbrennungskraftmaschine 22, wie ein Diesel oder eine Turbine, über eine Welle 23 mit einem elektrischen Generator 24 verbunden ist. Der Generator 24 erzeugt Drehstrom für ein Inselnetz, welches über einen Verteilernetzanschluss 25 angeschlossen ist.

## Patentansprüche

1. Energieversorgungssystem für ein Inselnetz (1),
mit einer ersten Stromerzeugungseinrichtung (7),
mit einer zweiten Stromerzeugungseinrichtung (8),
mit einer dritten Stromerzeugungseinrichtung (9),
mit einer vierten Stromerzeugungseinrichtung (10)
mit einer Last (13,14,15,16),
mit einem Energiemanagementsystem (2),
mit einem ersten Betriebszustand (17) und einem von diesem unterschiedlichen zweiten Betriebszustand (18),
wobei im ersten Betriebszustand der ersten Stromerzeugungseinrichtung (7) ein erster Betriebsmodus (19) zugeordnet ist und der zweiten Stromerzeugungseinrichtung (8) ein zweiter Betriebsmodus (20) zugeordnet ist,
wobei im zweiten Betriebszustand (18) der zweiten Stromerzeugungseinrichtung (8) der erste Betriebsmodus (19) zugeordnet ist,
wobei im ersten Betriebszustand (17) der dritten Stromerzeugungseinrichtung (9) der zweite Betriebsmodus (21) zugeordnet ist, wobei im zweiten Betriebszustand (18) der dritten Stromerzeugungseinrichtung (9) auch der zweite Betriebsmodus (20) zugeordnet ist,
**dadurch gekennzeichnet, dass**
der zweite Betriebsmodus (20) ein DROOP-Mode ist und eine Leistungsergänzungsfunktion aufweist, wobei im ersten Betriebszustand (17) der vierten Stromerzeugungseinrichtung (10) ein dritter Betriebsmodus (20) zugewiesen ist, wobei im zweiten Betriebszustand (18) der vierten Stromerzeugungseinrichtung (10) auch der dritte Betriebsmodus (20) zugeordnet ist,
und dass die Zuordnung eines Betriebsmodus (18, 19, 20) abhängt von einer Priorisierung der Stromerzeugungseinrichtungen (7,8,9,10), wobei die Stromerzeugungseinrichtung (7,8,9,10), welche im ersten Betriebsmodus (19) ist, eine Nennleistung von mindestens 200% der Nennleistung der größten Last (13,14,15,16) hat.

2. Energieversorgungssystem (1) nach Anspruch 1, wobei der erste Betriebsmodus (19) eine Leistungsfunktion aufweist.

3. Energieversorgungssystem (1) nach einem der Ansprüche 1 oder 2, wobei der erste Betriebsmodus (19) eine cosϕ-Funktion aufweist.

4. Energieversorgungssystem (1) nach einem der Ansprüche 1 bis 3, wobei zumindest eine der Stromerzeugungseinrichtungen (7,8,9,10) eine Verbrennungskraftmaschine (22) und einen elektrischen Generator (24) aufweist.

5. Energieversorgungssystem (1) nach einem der Ansprüche 1 bis 4, wobei die Stromerzeugungseinrichtungen (7,8,9,10) ein Inselnetz (11) ausbilden, wobei die Stromerzeugungseinrichtungen (7,8,9,10) im Inselnetz (11) je eine Leistung kleiner 100 MW aufweisen.

6. Verfahren zum Betrieb eines Inselnetzes (11), wobei die im Inselnetz (11) benötigte Wirkleistung und Blindleistung berechnet wird und wobei die Last auf eine Vielzahl von Stromerzeugungseinrichtungen (7,8,9,10) derart verteilt wird, dass der Betrieb der Stromerzeugungseinrichtungen (7,8,9,10) optimiert wird, **dadurch gekennzeichnet, dass** ein Energieversorgungssystem (1) nach einem der Ansprüche 1 bis 5 verwendet wird.

7. Verfahren nach Anspruch 6, wobei zur Optimierung des Betriebes der Stromerzeugungseinrichtungen (7,8,9,10) die Mehrzahl der Stromerzeugungseinrichtungen (7,8,9,10) in einem optimalen Betriebspunkt betrieben werden, wobei der optimale Betriebspunkt vom Hersteller der Stromerzeugungseinrichtung definiert wird und durch Umgebungsparameter wie Umgebungstemperatur, Dampftemperatur, Dampfdruck, Kühlwassertemperatur bestimmt wird.

8. Verfahren nach Anspruch 7, wobei zur Optimierung des Betriebes des Inselnetzes (11) der Wert der erzeugten Leistung, welcher mit Stromerzeugungseinrichtungen (7,8,9,10) im optimalen Betriebspunkt erzeugt wird, maximiert wird.

9. Verfahren nach einem der Ansprüche 7 bis 8, wobei das Inselnetz (11) auf einem Schiff verwendet wird.

10. Verfahren nach einem der Ansprüche 7 bis 9, wobei das Inselnetz (11) auf einer Plattform verwendet wird, welche zum Einsatz auf See geeignet ist.

## Claims

1. Energy supply system for an island grid (1),
having a first electricity generating device (7),
having a second electricity generating device (8),
having a third electricity generating device (9),
having a fourth electricity generating device (10),
having a load (13, 14, 15, 16),
having an energy management system (2),
having a first operating state (17) and a second operating state (18) which differs therefrom,
wherein a first operating mode (19) is assigned to the first electricity generating device (7) and a second operating mode (20) is assigned to the second electricity generating device (8) in the first operating state,
wherein the first operating mode (19) is assigned to the second electricity generating device (8) in the second operating state (18),
wherein the second operating mode (21) is assigned to the third electricity generating device (9) in the first operating state (17), wherein the second operating mode (20) is also assigned to the third electricity generating device (9) in the second operating state (18),
**characterized in that**
the second operating mode (20) is a droop mode and has a power addition function, wherein a third operating mode (20) is allocated to the fourth electricity generating device (10) in the first operating state (17), wherein the third operating mode (20) is also assigned to the fourth electricity generating device (10) in the second operating state (18),
and **in that** the assignment of an operating mode (18, 19, 20) depends on a prioritization of the electricity generating devices (7, 8, 9, 10), wherein the electricity generating device (7, 8, 9, 10) that is in the first operating mode (19) has a rated power of at least 200% of the rated power of the greatest load (13, 14, 15, 16).

2. Energy supply system (1) according to Claim 1, wherein the first operating mode (19) has a power function.

3. Energy supply system (1) according to either of Claims 1 and 2, wherein the first operating mode (19) has a cosϕ function.

4. Energy supply system (1) according to one of Claims 1 to 3, wherein at least one of the electricity generating devices (7, 8, 9, 10) has an internal combustion engine (22) and an electric generator (24).

5. Energy supply system (1) according to one of Claims 1 to 4, wherein the electricity generating devices (7, 8, 9, 10) form an island grid (11), wherein the electricity generating devices (7, 8, 9, 10) in the island grid (11) each have a power of less than 100 MW.

6. Method for operating an island grid (11), wherein the active power and reactive power required in the island grid (11) are calculated, and wherein the load is distributed among a plurality of electricity generating devices (7, 8, 9, 10) in such a way that operation of the electricity generating devices (7, 8, 9, 10) is optimized, **characterized in that** an energy supply system (1) according to one of Claims 1 to 5 is used.

7. Method according to Claim 6, wherein, to optimize operation of the electricity generating devices (7, 8, 9, 10), the majority of the electricity generating devices (7, 8, 9, 10) are operated at an optimum operating point, wherein the optimum operating point is defined by the manufacturer of the electricity generating device and is determined by ambient parameters, such as ambient temperature, steam temperature, steam pressure, cooling water temperature.

8. Method according to Claim 7, wherein, to optimize operation of the island grid (11), the value of the generated power that is generated using electricity generating devices (7, 8, 9, 10) at the optimum operating point is maximized.

9. Method according to one of Claims 7 to 8, wherein the island grid (11) is used on a ship.

10. Method according to one of Claims 7 to 9, wherein the island grid (11) is used on a platform that is suitable for use at sea.

## Revendications

1. Système d'alimentation électrique d'un réseau (1) isolé, comprenant un premier dispositif (7) de production de courant, comprenant un deuxième dispositif (8) de production de courant, comprenant un troisième dispositif (9) de production de courant, comprenant un quatrième dispositif (10) de production de courant,
comprenant une charge (13, 14, 15, 16),
comprenant un système (2) de gestion de l'énergie,
comprenant un premier état (17) de fonctionnement et un deuxième état (18) de fonctionnement différents de celui-ci,
dans lequel, dans le premier état de fonctionnement, un premier mode (19) de fonctionnement est associé au premier dispositif de production de courant et un deuxième mode (20) de fonctionnement est associé au deuxième dispositif (8) de production de courant, dans lequel, dans le deuxième état (18) de fonctionnement, le premier mode (19) de fonctionnement est associé au deuxième dispositif (8) de production de courant,
dans lequel, dans le premier état (17) de fonctionnement, le deuxième mode (21) de fonctionnement est associé au troisième dispositif (9) de production de courant, dans lequel, dans le deuxième état (18) de fonctionnement, le deuxième mode (20) de fonctionnement est associé également au troisième dispositif (9) de production de courant,
**caractérisé en ce que**
le deuxième mode (20) de fonctionnement est un mode DROOP et a une fonction de complément de puissance, dans lequel, dans le premier état (17) de fonctionnement, un troisième mode (20) de fonctionnement est attribué au quatrième dispositif (10) de production de courant, dans lequel, dans le deuxième état (18) de fonctionnement, le troisième mode (20) de fonctionnement est associé également au quatrième dispositif (10) de production de courant,
et **en ce que** l'association d'un mode (18, 19, 20) de fonctionnement dépend d'une prioritisation des dispositifs (7, 8, 9, 10) de production de courant, dans lequel le dispositif (7, 8, 9, 10) de production de courant, qui est dans le premier mode (19) de fonctionnement, a une puissance nominale d'au moins 200 % de la puissance nominale de la charge de référence (15, 16) la plus grande.

2. Système (1) d'alimentation électrique suivant la revendication 1, dans lequel le premier mode (19) de fonctionnement a une fonction de puissance.

3. Système (1) d'alimentation électrique suivant l'une des revendications 1 ou 2, dans lequel le premier mode (19) de fonctionnement a une fonction cosinus ϕ.

4. Système (1) d'alimentation électrique suivant l'une des revendications 1 à 3, dans lequel au moins l'un des dispositifs (7, 8, 9, 10) de production de courant a un moteur (22) à combustion interne et un générateur (24) électrique.

5. Système (1) d'alimentation électrique suivant l'une des revendications 1 à 4, dans lequel les dispositifs (7, 8, 9, 10) de production de courant constituent un réseau (11) isolé, dans lequel les dispositifs (7, 8, 9, 10) de production de courant du réseau (11) isolé ont chacun une puissance plus petite que 100 MW.

6. Procédé pour faire fonctionner un réseau (11) isolé, dans lequel on calcule la puissance active et la puissance réactive nécessaire au réseau (11) isolé et dans lequel on répartit la charge sur une pluralité de dispositifs (7, 8, 9, 10) de production de courant de manière à optimiser le fonctionnement des dispositifs (7, 8, 9, 10) de production de courant, **caractérisé en ce qu'**on utilise un système (1) d'alimentation électrique suivant l'une des revendications 1 à 5.

7. Procédé suivant la revendication 6, dans lequel, pour l'optimisation du fonctionnement du dispositif (7, 8, 9, 10) de production de courant, on fait fonctionner la pluralité des dispositifs (7, 8, 9, 10) de production de courant à un point de fonctionnement optimum, dans lequel on définit le point de fonctionnement optimum par le fabricant du dispositif de production de courant et on le détermine par un paramètre ambiant, comme la température ambiante, la température de la vapeur, la pression de la vapeur et la température de l'eau de refroidissement.

8. Procédé suivant la revendication 7, dans lequel, pour l'optimisation du fonctionnement du réseau (11) isolé, on rend maximum la valeur de la puissance produite, qui est produite par des dispositifs (7, 8, 9, 10) de production de courant au point de fonctionnement optimum.

9. Procédé suivant l'une des revendications 7 à 8, dans lequel on utilise le réseau (11) isolé sur un bâtiment de navigation.

10. Procédé suivant l'une des revendications 7 à 9, dans lequel on utilise le réseau (11) isolé sur une plateforme, qui est propre à être utilisée en mer.
